# EUROPÄISCHE PATENTSCHRIFT

(11) **EP 1 538 427 B1**
(45) Veröffentlichungstag und Bekanntmachung des Hinweises auf die Patenterteilung: **22.04.2015**
(21) Anmeldenummer: 04026886.4
(22) Anmeldetag: 12.11.2004
(51) Int. Cl.: G01F 23/00, H01R 13/52, G01D 11/24

(54) **Druck-Federelement zum Anschluss eines Kabels an einen Messwertaufnehmer**
Compression spring element for connecting a cable to a transducer
Elément à ressort de compression pour connexion d'un câble à un transducteur

(30) Priorität: 04.12.2003 DE 10357041
(43) Veröffentlichungstag der Anmeldung: 08.06.2005
(73) Patentinhaber: VEGA Grieshaber KG, 77709 Wolfach (DE)
(72) Erfinder: Kopp, Thomas, Dipl.-Ing. (FH), 77709 Wolfach (DE); Dieterle, Hermann, 77709 Wolfach (DE)
(74) Vertreter: Westphal, Mussgnug & Partner Patentanwälte mbB

(56) Entgegenhaltungen:
- WO-A-02/063735
- DD-A5- 287 126
- DE-A1- 2 744 864
- DE-A1- 19 728 370

## Beschreibung

Die Erfindung betrifft einen Messwertaufnehmer, insbesondere einen Füllstandssensor, Druckmessumformer oder dergleichen, mit einem einen Sensor aufnehmenden Gehäuse und einer aus dem Gehäuse lösbaren und in das Gehäuse einbringbaren Kabeldurchführung, wobei die Kabeldurchführung mindestens eine Formdichtung aufweist.

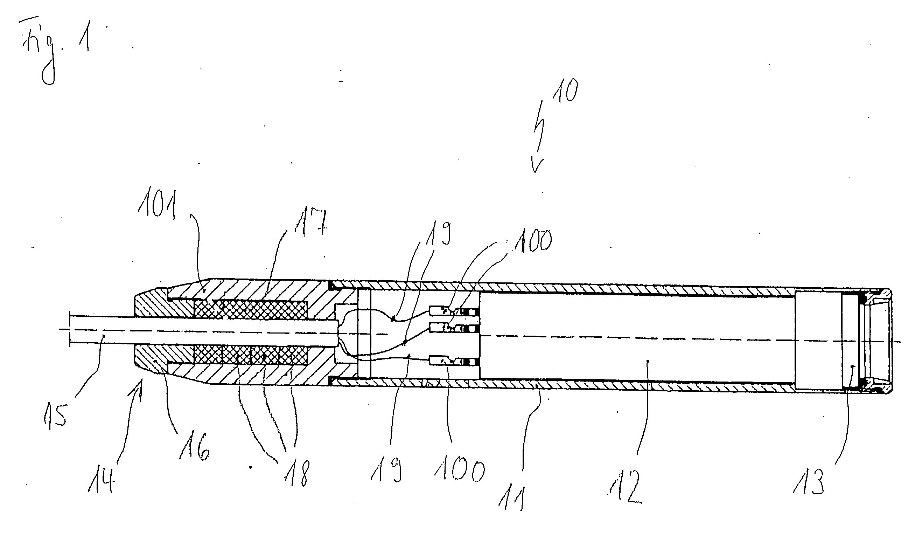

Fig. 1 zeigt einen aus dem Stand der Technik bekannten Messwertaufnehmer 10 mit einem Gehäuse 11, in dem ein elektronischer Messumformer 12 und ein Sensor 13 untergebracht sind. Ferner weist der Messwertaufnehmer 10 eine Kabeldurchführung 14 zur Durchführung eines Kabels 15 auf. Die Kabeldurchführung 14 kann eine Elastomer-Formdichtung 17 oder mehrere Elastomer-Formdichtugne 18 aufweisen, die durch eine Druckschraube 16 komprimiert werden. Aus dem Kabel 15 kommen Adern 19, die mittels Steckelementen 100, die als Stoßverbinder, Flachstecker oder Aderendhülsen ausgebildet sein können, an den elektronischen Messumformer 12 eingesteckt sind. Zur Verbesserung der Dichtheit werden die Elastomer-Formdichtungen 17 und 18 häufig mit dem Kabel 15 und einer Kabelaufnahme 101 verklebt. Bei der Demontage, die beispielsweise durch einen Servicevorgang bedingt sein kann, werden die verklebten Elastomer-Formdichtungen 17 und 18 zwangsweise beschädigt, so dass sie nicht mehr zu verwenden sind und gegen neue ausgetauscht werden müssen. Wenn auf eine Verklebung zwischen dem Kabel 15 und den Elastomer-Dichtungen 17 und 18 und der Kabelaufnahme 101 verzichtet wird, können die Elastomer-Formdichten 17 und 18 im Laufe der Zeit sowohl an dem Kabel 15 wie auch an der Kabelaufnahme 101 so stark festhaften, dass die Elastomer-Dichtungen 17 und 18 bei der Demontage der Kabeldurchführung 14 ebenfalls unvermeidbar zerstört werden. Um die Zerstörung der Elastomer-Dichtungen 17 und 18 bei der Demontage der Kabeldurchführung 14 zu vermeiden, werden häufig Mittel zur Reduzierung der Reibung verwendet, die jedoch im Laufe der Zeit durch die den Messwertaufnehmer 10 umgebenden Medien ausgewaschen werden oder sich bei hohen Temperaturen zersetzen oder verflüchtigen. Deshalb ist eine Demontage der Kabeldurchführung 14 ohne eine Zerstörung der Elastomer-Formdichtungen 17 und 18 nach dem Stand der Technik nicht möglich. Bei der Demontage der Kabeldurchführung 14 werden zwangsläufig auch die Steckelemente 100 von dem elektronischen Messumformer 12 entfernt. Beim Lösen der Steckelemente 100 bei anliegender Versorgungsspannung kann beispielsweise infolge einer Drehbewegung der Kabeldurchführung 14 ein unerwünschter Kurzschluss im Stromkreis entsehen.

Eine Kabeldurchführung für eine Messsonde offenbart die WO 02/063735 A. Weiterer Stand der Technik ist in der DD 287 126 A5 und in der DE 197 28 370 A1 offenbart.

Die Erfindung hat die Aufgabe, einen Messwertaufnehmer der eingangs genannten Art dahingehend zu verbessern, dass zukünftig die Formdichtung bei der Demontage oder Montage nicht beschädigt wird.

Die Erfindung löst die gestellte Aufgabe durch einen Messwertaufnehmer der eingangs genannten Art, der erfindungsgemäß durch die Merkmale des unabhängigen Anspruchs 1 gekennzeichnet ist.

Somit kann die mindestens eine Formdichtung nicht beim Demontieren oder Montieren der Kabeldurchführung an dem Gehäuse des Messwertaufnehmers festhaften oder reiben, so dass eine Beschädigung der mindestens einen Formdichtung zuverlässig ausgeschlossen ist und die Abdichtung zwischen dem Kabel und der mindestens einen Formdichtung unverändert erhalten bleibt. Somit kann beispielsweise im Servicefall ein mit der Kabeldurchführung verbundener elektrische Anschluss schnell und problemlos auf einen anderen Messwertaufnehmer umgesteckt werden. Mittels einer an dem Gehäuse des Messwertaufnehmers aufschraubbaren Überwurfmutter kann das Kabeldurchführungsgehäuse mit dem Gehäuse des Messwertaufnehmers verschraubt werden. Auf diese Weise lässt sich die Kabeldurchführung mit wenigen Handgriffen schnell und zuverlässig mit dem Gehäuse des Messwertaufnehmers verbinden.

Um die Dichtwirkung der mindestens einen Formdichtung zu erhöhen, wirkt sie mit einem Federelement, z.B. einer Druckfeder, zusammen.

Das Federelement komprimiert dabei die das Kabel umschließende mindestens eine Formdichtung und erhöht somit die Dichtwirkung der mindestens einen Formdichtung.

Zur optimalen Übertragung der Federkraft auf die mindestens eine Formdichtung und um diese vor Beschädigungen durch die Druckfeder zu schützen, kann zwischen der Druckfeder und der mindestens einen Formdichtung ein Ring angeordnet sein. Zwecks einer leichten und schnellen Montage wird in das Kabeldurchführungsgehäuse ein die Druckfeder aufnehmendes Federgehäuse eingeschraubt.

Zur leichteren Montage und Demontage der Kabeldurchführung mit dem Gehäuse oder von dem Gehäuse des Messwertaufnehmers kann in dem Kabel eine in das Innere des Gehäuses mündende Be- und Entlüftungsleitung angeordnet sein. Bei der Montage der Kabeldurchführung auf das Gehäuse kann somit durch die Entlüftungsleitung die im Gehäuseinneren befindliche Luft in die Umgebung entweichen. Bei der Demontage der Kabeldurchführung von dem Gehäuse hingegen kann durch die Belüftungsleitung Luft in das Gehäuseinnere eintreten, so dass beim Abziehen der Kabeldurchführung von dem Gehäuse kein Unterdruck im Gehäuseinneren entsteht, der ein Abziehen der Kabeldurchführung von dem Gehäuse des Messwertaufnehmers erschweren würde.

Am freien Ende des Federgehäuses können elektrische Steckanschlüsse angebracht sein, die starr mit der Kabeldurchführung verbunden sind und somit auch bei einer Demontage der Kabeldurchführung bei anliegender elektrischer Versorgungsspannung kurzschlusssicher aus den mit ihnen verbunden Anschlussbuchsen herausgezogen werden können.

Um eine optimale Dichtwirkung zwischen dem Kabeldurchführungsgehäuse und dem Gehäuse des Messwertaufnehmers sicherzustellen, kann zwischen dem Kabeldurchführungsgehäuse und dem Gehäuse des Messwertaufnehmers ein O-Ring angeordnet sein.

Nachfolgend wird ein Ausführungsbeispiel des erfindungsgemäßen Messwertaufnehmers anhand der beiliegenden Zeichnung näher erläutert.

Im Einzelnen zeigen:
- Fig. 1: einen Längsschnitt durch einen aus dem Stand der Technik bekannten Messwertaufnehmer;
- Fig. 2: einen Längsschnitt durch einen ersten, nicht erfindungsgemäßen, Messwertaufnehmer und
- Fig. 3: einen Längsschnitt durch einen zweiten, erfindungsgemäßen, Messwertaufnehmer.

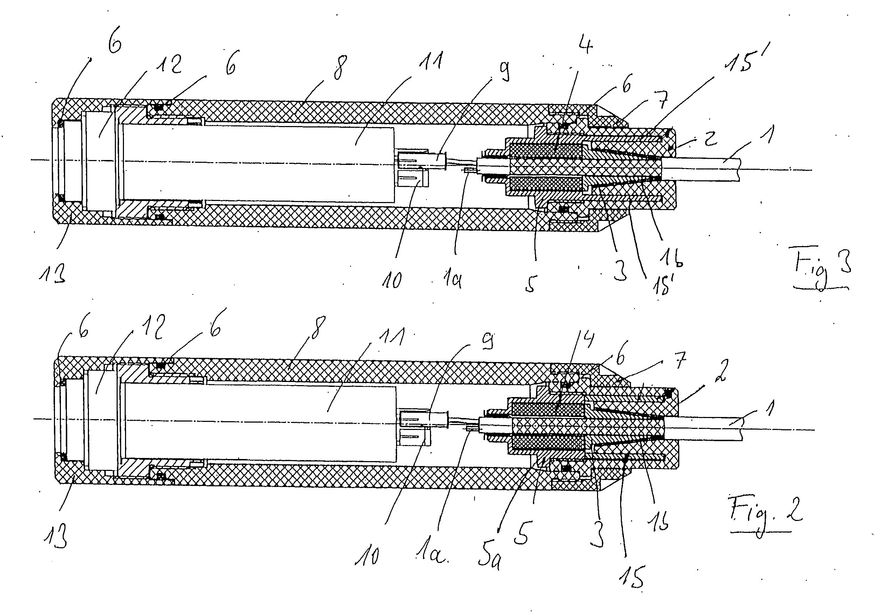

In Figur 2 ist ein nicht erfindungsgemäßer Messwertaufnehmer dargestellt. Der Messwertaufnehmer weist ein rohrförmiges Sensorgehäuse 8 auf mit einem darin angeordneten, elektronischen Messumformer 11, wobei dieser elektronische Messumformer 11 an der in der Figur 2 dargestellten rechten Seite über ein Buchsengehäuse 9 und eine Stiftwanne 10 an ein Anschlusskabel 1 in noch zu erläuternder Weise angeschlossen werden kann. Der elektronische Messumformer 11 weist an der gegenüberliegenden Seite ein Sensorelement 12 auf, welches in einem zylinderförmigen Gehäuseteil 13 sitzt. Dieses zylinderförmige Gehäuseteil 13 ist über O-Ringdichtungen 6 einerseits mit dem Sensorgehäuse 8 dichtend in Verbindung und zum anderen mit dem Drucksensor 12. Das Gehäuseteil 13 und der Sensorgehäuseteil 8 können beispielsweise miteinander verschraubt sein. Andere Befestigungsmöglichkeiten sind ebenfalls denkbar.

Der elektrische Anschluss des Kabels 1 an dem elektronischen Messumformer 11 geschieht in besonderer Art und Weise, die nachfolgend erläutert werden wird. Das Anschlusskabel 1 ist an seinem vorderen Ende so abisoliert, dass ein Innenleiter an das erwähnte Buchsengehäuse 9 angeschlossen ist. Dieses Buchsengehäuse 9 ist dazu vorgesehen, auf einen geeigneten Steckanschluss des elektrischen Messumformers 11 aufgesteckt zu werden. Zusätzlich verfügt das Anschlusskabel 1 an seinem vorderen, freien Ende über eine innenliegende Belüftungskabelare 1a. Diese Belüftungskabelare 1a ist optional und muss nicht vorgesehen sein.

Um das Anschlusskabel 1 herum sitzt eine Kabelaufnahme 2, die vorzugsweise aus Kunststoffmaterial gebildet ist. Aus Elastizitätsgründen ist in diese Kabelaufnahme 2 eine ringförmige und zur Achse des Kabels 1 konzentrische Öffnung eingearbeitet, in der vorzugsweise ein metallischer Stützring sitzt. Die Kabelaufnahme 2 hat darüber hinaus eine zentrische, sich konisch erweiternde Öffnung, innerhalb der eine entsprechend konisch verlaufende Stützhülse 3 sitzt. Das Kabel 1 ist dabei so aufbereitet, dass der Kabelmantel 1b im montierten Zustand zwischen der Wandung der Kabelaufnahme 2 und der Außenwandung der konisch verlaufenden Stützhülse 3 eingeklemmt ist. An die in Figur 2 links dargestellte, vertikal zur Achse des Kabelmantels 1 verlaufenden Wandung der Stützhülse 3 ist ein Druckfederelement 4, das hier als zylinderförmiges, elastisches Teil ausgeführt ist, angeordnet. Um dieses Druckfederelement 4 herum ist ein Federgehäuse 5. Dieses Federgehäuse 5 schließt bündig an die oben erwähnte Ringhülse 15 an. Gemäß Figur 3, die einen erfindungsgemäßen Messwertaufnehmer zeigt, ist das Federgehäuse 5 einstückig mit der Ringhülse 15 gefertigt. Das Federgehäuse 5 greift an seinem in Figur 2 und Figur 3 links dargestellten Rand um das Druckfederelement 4 herum und setzt sich hülsenförmig mit einem verringerten Durchmesser zum Buchsengehäuse 9 hin fort. Das Federgehäuse 5 weist darüber hinaus auf seiner halben Erstreckung einen nach außen springenden, umlaufenden Sechskant 5a auf, der zugleich einen Anschlag für das Kabelaufnahmegehäuse 2 und als Monatgehilfe dient. Das Kabelaufnahmegehäuse 2 weist eine umlaufende, ringförmige Nut auf, in der ein weiterer O-Ring sitzt.

Die gesamte Anordnung bestehend aus Kabelaufnahmegehäuse 2, Ringhülse 15 mit darin befindlicher, konischer Stützhülse 3, Druckfederelement 4 sowie Federgehäuse 5 bildet eine bauliche Einheit, die mittels Überwurfhülse 7 an dem Sensorgehäuse 8 befestigbar ist.

Der wesentliche Vorteil der erfindungsgemäßen Ausführungsform besteht darin, dass das Zerstören des thermoplastischen Kunststoffgehäuses, wie es bei herkömmlichen Kabelabdichtungen der Fall ist, vermieden werden kann. Bei Austausch des Sensors ist nämlich das Anschlusskabel 1, das zuvor in einem anderen Messwertaufnehmer eingebaut war, nicht gequetscht. Damit wird das Eindringen von Medien, wie z. B. Flüssigkeiten, in die Messsonde wirksam verhindert. Durch diese Maßnahme kann die Medientemperatur bis an die Temperaturgrenze der Elektronik betrieben werden und es können Medien mit dem erfindungsgemäßen Messwertaufnehmer gemessen werden, die trotz Quellwirkung des Kunststoffes nicht zum Ausfall der Messsonde führen. Weiterhin kann die Messsonde nach der Erfindung in Medien betrieben werden, bei denen Elastomere der Kabelabdichtung nicht beständig sind, da Formdichtungen aus hochwertigen Elastomerwerkstoffen, wie z.B. Kalrez nicht ab Lager verfügbar und damit im Verhältnis zum Gerätepreis nicht marktfähig sind.

## Patentansprüche

1. Füllstandmesswertaufnehmer mit einem einen Sensor (11, 12) aufnehmenden Gehäuse (8), durch dessen eine Öffnung ein Anschlusskabel (1) zum Anschließen an den Sensor (11, 12) vorgesehen ist und wobei das Anschlusskabel (1) von einem Druck-Federelement (4) umgeben ist, wobei neben dem Druck-Federelement (4) eine konische Stützhülse (3) angeordnet ist und ein Kabelaufnahmegehäuse (2) mit einer konischen Öffnung vorgesehen ist, in welcher die konische Stützhülse (3) eingreift und wobei zwischen der konischen Stützhülse (3) und dem Kabelaufnahmegehäuse (2) ein Kabelmantel (1b) des Anschlusskabels (1) eingeklemmt ist, wobei das Druckfederelement (4) von einem Federgehäuse (5) umgeben,
**dadurch gekennzeichnet, dass** das Kabelaufnahmegehäuse (2) aus thermoplastischem Material besteht und mittels Überwurfhülse (7) an dem Sensorgehäuse (8) festlegbar ist, und in dem Kabelaufnahmegehäuse (2) ein Stützring angeordnet ist, der mit dem Federgehäuse (5) einstückig ausgebildet ist.

2. Messwertaufnehmer nach Anspruch 1,
**dadurch gekennzeichnet, dass** der Stützring aus Metall ist.

3. Messwertaufnehmer nach einem der Ansprüche 1 bis 2,
**dadurch gekennzeichnet, dass** das Stützring aus einem Werkstoff besteht, der eine größere Festigkeit als das Kabelaufnahmegehäuse (2) hat.

4. Messwertaufnehmer nach einem der Ansprüche 1 bis 3,
**dadurch gekennzeichnet, dass** das Druckfederelement (4) als Spiralfeder ausgebildet ist.

5. Messwertaufnehmer nach einem der Ansprüche 1 bis 4,
**dadurch gekennzeichnet, dass** das Druckfederelement (4) ein zylindrisches Teil aus einem elastischen Werkstoff ist.

## Claims

1. Fill level transducer with a housing (8) which accommodates a sensor (11, 12) and which has an aperture through which a connecting cable (1) is provided for connection to the sensor (11, 12), and wherein the connecting cable (1) is encompassed by a pressure spring element (4), wherein a conical support sleeve (3) is arranged next to the pressure spring element (4), and a cable holding housing (2) with a conical aperture is provided, into which the conical support sleeve (3) engages and wherein clamped between the conical support sleeve (3) and the cable holding housing (2) is a cable jacket (1b) of the connecting cable (1), wherein the pressure spring element (4) [is] encompassed by a spring housing (5),
**characterised in that** the cable holding housing (2) consists of thermoplastic material and can be fixed to the sensor housing (8) by means of a cap sleeve (7), and that arranged in the cable holding housing (2) is a support ring which is formed in one piece with the spring housing (5).

2. Transducer according to claim 1,
**characterised in that** the support ring is made of metal.

3. Transducer according to one of the claims 1 to 2,
**characterised in that** the support ring consists of a material of a greater strength than that of the cable holding housing (2).

4. Transducer according to one of the claims 1 to 3,
**characterised in that** the pressure spring element (4) is designed as a spiral spring.

5. Transducer according to one of the claims 1 to 4,
**characterised in that** the pressure spring element (4) is a cylindrical part made of an elastic material.

## Revendications

1. Transducteur de mesure de niveau comprenant un boitier (8) recevant un capteur (11, 12) au travers d'une ouverture duquel est monté un câble de connexion (1) destiné à être connecté au capteur (11, 12), transducteur dans lequel le câble de connexion (1) est entouré par un élément de ressort de pression (4), une douille d'appui conique (3) est monté au voisinage de l'élément de ressort de pression (4), et, il est prévu un boitier de réception du câble (2) muni d'une ouverture conique dans laquelle vient en prise la douille d'appui conique (3), et, une enveloppe (1b) du câble de connexion (1), est bloquée entre la douille d'appui conique (3) et le boitier de réception de câble (2) l'élément de ressort de pression (4) étant entouré par un boitier élastique (5),
**caractérisé en ce que**
le boitier de réception du câble (2) est réalisé en un matériau thermoplastique et peut être fixé sur le boitier du capteur (8) au moyen d'un écrou chapeau (7), et, dans le boitier de réception du câble (2) est montée une bague d'appui qui est réalisée en une seule pièce avec le boitier de ressort (5).

2. Transducteur conforme à la revendication 1,
**caractérisé en ce que**
la bague d'appui est réalisée en métal.

3. Transducteur conforme à l'une des revendications 1 et 2,
**caractérisé en ce que**
la bague d'appui est réalisée en un matériau qui a une plus grande résistance mécanique que le boitier de réception du câble (2).

4. Transducteur conforme à l'une des revendications 1 à 3,
**caractérisé en ce que**
l'élément de ressort de pression (4) est réalisé sous la forme d'un ressort spiral.

5. Transducteur conforme à l'une des revendications 1 à 4,
**caractérisé en ce que**
l'élément de ressort de pression (4) est une pièce cylindrique réalisée en un matériau élastique.
